Europäisches Patentamt

European Patent Office

Office européen des brevets

(19)

(11) Publication number : **0 322 368 B1**

(12) **EUROPEAN PATENT SPECIFICATION**

(45) Date of publication of patent specification :
13.05.92 Bulletin 92/20

(51) Int. Cl.⁵ : **B60K 17/28,** B60K 25/06, F16H 3/08

(21) Application number : 88830435.9

(22) Date of filing : 25.10.88

(54) A four-speed power take-off for tractors.

(30) Priority : 26.10.87 IT 6789787

(43) Date of publication of application :
28.06.89 Bulletin 89/26

(45) Publication of the grant of the patent :
13.05.92 Bulletin 92/20

(84) Designated Contracting States :
AT CH DE ES FR GB LI

(56) References cited :
EP-A- 0 061 903
EP-A- 0 113 495
EP-A- 0 153 196

(56) References cited :
DE-A- 2 848 284
DE-A- 3 120 684
DE-A- 3 233 931
DE-A- 3 544 415

(73) Proprietor : SAME S.p.A.
Viale F. Cassani, 14
I-24047 Treviglio Bergamo (IT)

(72) Inventor : Massaccesi, Gianni
c/o SAME S.p.A Viale F. Cassani, 14
I-24047 Treviglio Bergamo (IT)

(74) Representative : Buzzi, Franco et al
c/o Jacobacci-Casetta & Perani S.p.A. Via
Alfieri, 17
I-10121 Torino (IT)

EP 0 322 368 B1

# Description

The present invention relates to power take-offs for tractors, of the type comprising an input shaft which can be connected to a transmission shaft, and an output shaft, the input and the output shafts carrying two pairs of permanently meshed gears, driving gears and driven gears respectively, with different transmission ratios, in which the driven gears carried by the output shaft are selectively connectible for rotation therewith by means of a sliding coupling sleeve, and in which supplementary coupling means are provided for achieving four operating speeds of the power take-off.

In effect, the supplementary means have the function of enabling the power take-off to be operated at the two conventional speeds (normally 540 and 1000 r.p.m.) which can be selected by the sleeve coupling, and at a reduced rate of rotation of the tractor engine and hence at reduced noise and fuel-consumption levels.

Conventionally, these supplementary means include, two pairs of driving and driven gears with respective countershafts. This solution has the problem that it requires a large number of components, as well as a complicated structure and increased dimensions of the casing of the power take-off.

The object of the present invention is to avoid the above problems and to produce a four-speed power take-off of the type defined above which does not require the use of countershafts and additional working of the control box of the power take-off, and is therefore simple to produce and less bulky, and which can also be applied to existing conventional two-speed power take-offs.

According to the invention, this object is achieved by virtue of the fact that:

a hollow shaft is mounted rotatably on the input shaft and the two driving gears are fixed for rotation with said hollow shaft,

a third driving gear is fixed for rotation with the input shaft,

a third gear fixed to one of the two driven gears is meshed with the third driving gear, and

the supplementary coupling means are provided for selectively coupling the input shaft or the hollow shaft for rotation with the transmission shaft of the tractor.

By virtue of this concept, the four operating speeds of the power take-off are obtained with only three pairs of gears and without the need for countershafts, thus keeping the bulk in the casing of the power take-off whithin the limits of conventional two-spaced power take-offs.

In practice, by virtue of the arrangement according to the invention, the drive is transmitted selectively from the transmission shaft of the tractor to the two driving gears directly through the hollow shaft or indirectly through the input shaft and the third driving and driven gears.

The supplementary coupling means conveniently comprise a splined portion of the input shaft, frontal teeth on the hollow shaft, and a supplementary sleeve coupled for rotation with the transmission shaft and slidable relative thereto, and having an internally-splined portion and frontal teeth, the sleeve being movable axially between respective positions in which the splined portions are engaged and the frontal teeth are disengaged, and vice versa.

According to another advantageous characteristic of the invention, the third driven gear is formed integrally with one of the two driven gears.

The invention will now be described in detail with reference to the appended drawings, in which:

Figure 1 is a schematic longitudinal sectional view of a four-speed power take-off for tractors, shown in a rest configuration, and

Figures 2 and 3 are views similar to Figure 1 with the power take-off in two different operating conditions.

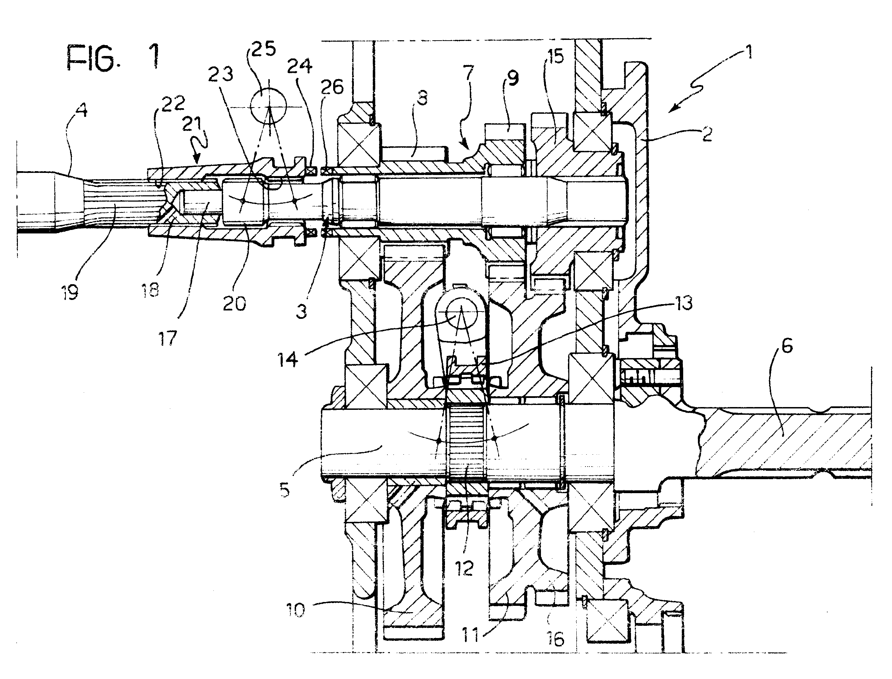

With reference initially to Figure 1, a four-speed power take-off for tractors is generally indicated 1 and includes a casing 2 which rotatably supports an input shaft 3 connectible to a transmission shaft 4 of the tractor in the manner explained below, and an output shaft 5 carrying a splined power take-off shaft 6 which projects from the casing 2.

A hollow shaft 7 is mounted rotatably on the input shaft 3 and first and second driving gears 8, 9 are formed thereon and meshed respectively with first and second driven gears 10, 11 mounted rotatably on the output shaft 5. This shaft has an intermediate splined portion 12 on which is engaged a slidable coupling sleeve 13 operable by means of a control member 14 for selectively coupling one or other of the two driven gears 10, 11 for rotation with the output shaft 5.

A third driving gear 15 is keyed to the input shaft 3, adjacent the hollow shaft 7, and is meshed with a third driven gear 16 mounted on the output shaft 5. The third driven gear 16 is in fact formed integrally with the second driven gear 11.

The input shaft 3 has an axial shank 17 which projects from the casing 2 and is coupled axially, in a freely rotatable manner, within a corresponding hollow end 18 of the transmission shaft 4, which has an externally-splined portion 19. The shank 17 has an externally-splined portion 20 whose function will be explained below.

The opposite end of the hollow shaft 7 from the third driving gear 15 projects from the casing 2 and has frontal end teeth 26.

An auxiliary operating sleeve, indicated 21, has an internally-splined portion 22 which is engaged on the splined portion 19 of the transmission shaft 4. The sleeve 21 has a further internally-splined portion 23 which is complementary to the splined portion 20 of the input shaft 3, and frontal teeth 24 complementary to and facing the frontal teeth 26 of the hollow shaft 7.

The auxiliary sleeve 21 is movable axially along the splined portion 19 of the transmission shaft 4 by means of an operating member, schematically indicated 25, into two operative positions situated on opposite sides of a central neutral position shown in Figure 1. In this neutral position, the drive is not transmitted from the transmission shaft 4 to the power take-off 1.

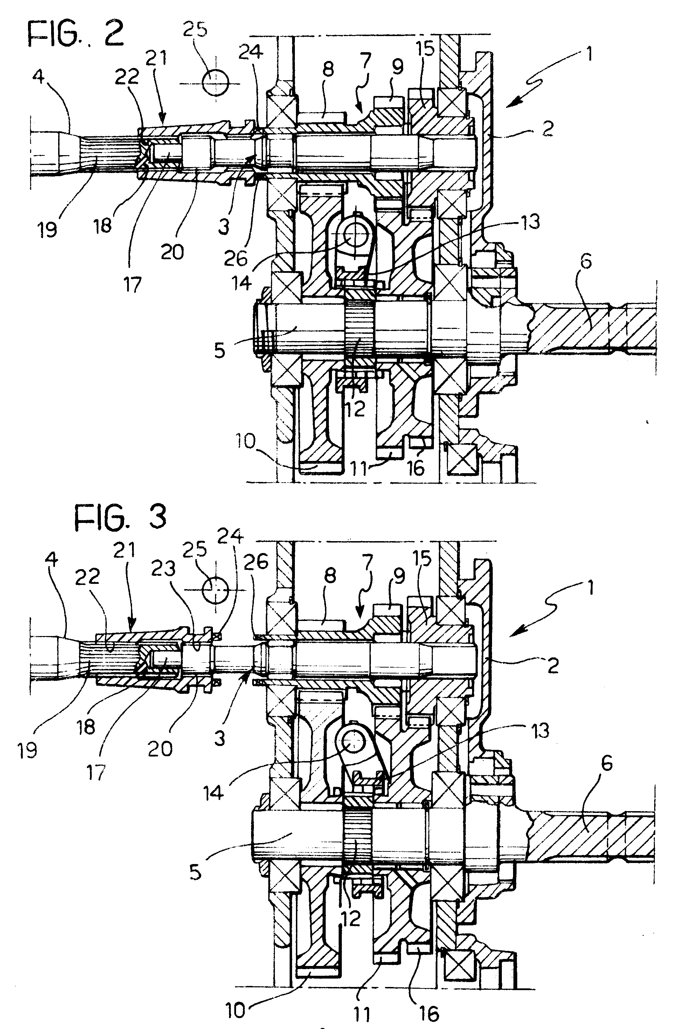

When the auxiliary sleeve 21 is moved into its first operative position, illustrated in Figure 2, engagement is achieved between the frontal teeth 24 and 26. The drive is thus transmitted from the transmission shaft 19 to the hollow shaft 7 and therefore directly to the two driving gears 8 and 9. It is therefore possible, by means of the operating member 14 and the sleeve 13, to select two different operating speeds of the output shaft 5 and hence the take-off shaft 6, one or other of the driven gears 10, 11 being selectively made fast with the output shaft 5. The take-off shaft 6 is thus rotated at a rate of 540 or 1000 r.p.m., the rate of rotation of the tractor engine being kept near that of maximum power.

If the power take-off 6 is required to operate at the same rates of revolution, but with the tractor engine operating at a reduced rate of rotation, and hence with lower fuel-consumption and noise levels, the auxiliary sleeve 21 is moved to the second operation position, shown in Figure 3, so as to engage the splined portions 20 and 23. The drive is thus transmitted from the transmission shaft 4 to the input shaft 3 and from this to the third driving gear 15 and thence to the third driven gear 16. The drive returns to the hollow shaft 7 through the second driven gear 11 and the second driving gear 9. Clearly, as in the preceding case, it is possible to select the two rates of rotation of the take-off shaft 6 by the operation of the control 14 and the sleeve coupling 13.

The two different positions which can be assumed by the sleeve 13 are shown one in Figure 2 and one in Figure 3.

It will be clear from the above that the arrangement described enables a four-speed power take-off to be provided with the use of only three pairs of gears and without the need for countershafts or a particularly complicated structure of the casing 2.

With the illustrated dimensions of the third pair of gears 15 and 16, the respective rates of revolution of the take-off shaft of 540 and 1000 r.p.m. in the operating condition of Figure 3 are obtained at a rate of rotation of the tractor engine which is approximately 28% less than in the operating condition of Figure 2. However, it is clear that, if the rate of rotation of the engine is kept at a rate near that of maximum power, correspondingly increased rates of revolution of the take-off shaft 6, for example, of the order of 750 and 1300 r.p.m., can be obtained in the condition of Figure 3.

## Claims

1. A power take-off (1) for tractors, comprising an input shaft (3) which can be connected to a transmission shaft (4) and an output shaft (5), the input and output shafts (3,5) carrying two pairs of permanently meshed gears, driving gears (8,9) and driven gears (10, 11) respectively, with different transmission ratios, the driven gear (10, 11) carried by the output shaft (5) being selectively connectible for rotation therewith by means of a sliding coupling sleeve (13), and supplementary coupling (21, 20, 23, 24, 26) for achieving four operating speeds of the power take-off, characterised in that:

a hollows shaft (7) is mounted rotatably on the input shaft (3) and the two driving gears (8, 9) are fixed for rotation with said hollow shaft (7),

a third driving gear (15) is fixed for rotation with the input shaft (3),

a third driven gear (16) fixed to one of the two driven gear (11) is meshed with the third driving gear (15), and

the supplementary coupling means (21, 20, 23, 24, 26) are provided for selectively coupling the input shaft (3) or the hollow shaft (7) for rotation with the transmission shaft (4) of the tractor.

2. A power take-off according to Claim 1, characterised in that the supplementary coupling means comprise a splined portion (20) of the input shaft (3), frontal teeth (26) of the hollow shaft (7), and a supplementary sleeve (21) coupled for rotation with the transmission shaft (4) and slidable relative thereto, and having an internally-splined portion (23) and frontal teeth (24), the auxiliary sleeve (21) being movable axially between respective positions in which the splined portions (20, 23) are engaged and the frontal teeth (24, 26) are disengaged, and vice versa.

3. A power take-off according to Claim 1, characterised in that the third driven gear (16) is formed integrally with one of the other two driven gears (10, 11).

## Patentansprüche

1. Zapfwellenantrieb (1) für Traktoren, der eine Antriebswelle (3), die mit einer Transmissionswelle (4) verbunden werden kann, und eine Abtriebswelle (5) enthält, wobei die Antriebs- und Abtriebswelle (3, 5) zwei Paare von dauernd im Eingriff stehenden Zahnrädern, d.h. treibende Zahnräder (8, 9) bzw. getriebene Zahnräder (10, 11), mit unterschiedlichen Übersetzungsverhältnissen tragen, wobei das getriebene Zahnrad (10, 11), das von der Abtriebswelle (5) getragen wird, wahlweise für eine Drehung mit Hilfe einer verschiebbaren Kupplungshülse (13) verbunden werden kann, sowie eine Zusatzkupplung (21, 20, 23, 24, 26) enthält, um vier Betriebsdrehzahlen des Zapfwellenantriebs zu erhalten, dadurch gekennzeichnet, daß:

eine Hohlwelle (7) drehbar auf der Antriebswelle (3) befestigt ist, und daß die beiden treibenden Zähnräder (8, 9) so befestigt sind, daß sie sich mit der Hohlwelle (7) drehen,

ein drittes treibendes Zahnrad (15) so befestigt ist, daß es sich mit der Antriebswelle (3) dreht,

ein drittes getriebenes Zahnrad (16), das an einem der beiden getriebenen Zahnräder (11) befestigt ist, mit dem dritten treibenden Zahnrad (15) in Eingriff steht, und

die Zusatzkupplungseinrichtung (21, 20, 23, 24, 26) so vorgesehen ist, um wahlweise die Antriebswelle (3) oder die Hohlwelle (7) mit der Transmissionswelle (4) des Traktors für eine Drehung zu kuppeln.

2. Zapfwellenantrieb gemäß Anspruch 1, dadurch gekennzeichnet, daß die Zusatzkupplungseinrichtung einen Keilprofilteil (20) der Antriebswelle (3), Stirnzähne (26) der Hohlwelle (7) sowie eine Zusatzhülse (21) enthält, die für eine Drehung mit der Transmissionswelle (4) gekuppelt ist und relativ dazu verschoben werden kann, wobei sie weiters einen Innen-Keilprofilteil (23) sowie Stirnzähne (24) besitzt, wobei die Zusatzhülse (21) axial zwischen entsprechenden Stellungen bewegbar ist, in denen die Keilprofilteile (20, 23) in Eingriff stehen und die Stirnzähne (24, 26) ausgerastet sind, und umgekehrt.

3. Zapfwellenantrieb gemäß Anspruch 1, dadurch gekennzeichnet, daß das dritte getriebene Zahnrad (16) gemeinsam mit dem ersten oder zweiten getriebenen Zahnrad (10, 11) ausgebildet ist.

## Revendications

1. Prise de force (1) pour tracteurs, comprenant un arbre d'entrée (3) qui peut être connecté à un arbre de transmission (4) et à un arbre de sortie (5), les arbres d'entrée et de sortie (3, 5) portant deux paires de pignons en prise en permanence, des pignons menants (8, 9) et des pignons menés (10, 11) respectivement, avec différents rapports de transmission, le pignon mené (10, 11) porté par l'arbre de sortie (5) pouvant être connecté sélectivement afin qu'il tourne avec eux à l'aide d'un manchon coulissant (13) d'accouplement, et un accouplement supplémentaire (21, 20, 23, 24, 26) destiné à donner quatre vitesses de fonctionnement à la prise de force, caractérisée en ce que :

un arbre creux (7) est monté afin qu'il puisse tourner sur l'arbre d'entrée (3) et les deux pignons menants (8, 9) sont fixés afin qu'ils tournent avec l'arbre creux (7),

un troisième pignon menant (15) est fixé en rotation par rapport à l'arbre d'entrée (3),

un troisième pignon mené (16) fixé à l'un des deux pignons menés (11) est en prise avec le troisième pignon menant (15), et

le dispositif supplémentaire (21, 20, 23, 24, 26) d'accouplement est destiné à accoupler sélectivement l'arbre d'entrée (3) ou l'arbre creux (7) afin qu'il tourne avec l'arbre de transmission (4) du tracteur.

2. Prise de force selon la revendication 1, caractérisée en ce que le dispositif supplémentaire d'accouplement comprend une partie cannelée (20) de l'arbre d'entrée (3), des dents frontales (26) de l'arbre creux (7), et un manchon supplémentaire (21) couplé afin qu'il tourne avec l'arbre de transmission (4), pouvant coulisser par rapport à celui-ci et ayant une partie à cannelures internes (23) et des dents frontales (24), le manchon auxiliaire (21) étant mobile axialement entre des positions respectives dans lesquelles les parties cannelées (20, 23) sont en prise et les dents frontales (24, 26) sont séparées, et inversement.

3. Prise de force selon la revendication 1, caractérisée en ce que le troisième pignon mené (16) est réalisé en une seule pièce avec l'un des deux autres pignons menés (10, 11).

FIG. 1

FIG. 2

FIG. 3